# EUROPÄISCHE PATENTSCHRIFT

(11) **EP 0 759 682 B1**
(45) Veröffentlichungstag und Bekanntmachung des Hinweises auf die Patenterteilung: **07.10.2009**
(21) Anmeldenummer: 96113010.1
(22) Anmeldetag: 13.08.1996
(51) Int. Cl.: H04Q 11/04, H04M 11/06

(54) **Digitales Nachrichtenvermittlungssystem**
Digital message switching system
Système de commutation de messages numériques

(30) Priorität: 22.08.1995 DE 19530857
(43) Veröffentlichungstag der Anmeldung: 26.02.1997
(73) Patentinhaber: Infineon Technologies AG, 81669 München (DE)
(72) Erfinder: Alger-Meunier, Michael, Dr. Ing., 85540 Haar (DE); Ammar, Yousif, Dr. rer. nat., 81675 München (DE); Hoefer, Gerald, Dipl.-Ing., 86853 Langerringen (DE)
(74) Vertreter: Charles, Glyndwr

(56) Entgegenhaltungen:
- EP-A- 0 333 225
- DE-C- 4 141 493
- US-A- 4 975 901

## Beschreibung

Die Erfindung betrifft ein digitales Nachrichtenvermittlungssystem nach dem Oberbegriff des Patentanspruches 1.

Nachrichtenvermittlungssysteme sind umso wirtschaftlicher, je mehr Endstellen sie zusammenfassen. Die zu übertragenden Signale werden daher stufenweise gebündelt und können so bei Bedarf in der jeweiligen Bündelungsebene (Hierarchiestufe) rangiert und verteilt werden. Moderne digitale Nachrichtenvermittlungssysteme sind daher üblicherweise hierarchisch organisierte, rechnergesteuerte Systeme, die von den einzelnen Endstellen übertragene Daten empfangen, auswerten, aufbereiten und/oder an eine andere Einheit weiterleiten.

Man unterscheidet dabei einerseits leitungsvermittelte Daten, die für eine bestimmte Zeit von einer Endstelle zur anderen übertragen werden. Diese Möglichkeit wird beispielsweise für hochpriorisierte Sprachübertragung gewählt, ist aber für eine allgemeine Datenübertragung oft ineffektiv, da verfügbare Übertragungsstrecken nur teilweise ausgelastet werden. Man unterscheidet daher andererseits paketvermittelte Daten, die bei Bedarf von einer Bündelungsebene zwischengespeichert werden, um durch Auswahl eines geeigneten, möglichen Übertragungswegs zwischen den jeweiligen Endstellen eine hohe Auslastung der Übertragungsstrecken zu erzielen.

Die Möglichkeit, sowohl paketvermittelte als auch leitungsvermittelte Daten zu übertragen, bieten digitale, universelle Schmalbandnetze wie beispielsweise das Integrated Services Digital Network (ISDN). Bei ISDN erfolgt der Zugang zu verschiedenen Kommunikationsdiensten über sogenannte Protokolle, die in entsprechenden Empfehlungen des Comitté Consultatif International Télégraphique e Téléfonique (CCITT) definiert sind. Diese Protokolle werden über Datenkanäle (D-Kanäle) ausgetauscht, über die auch zusätzlich Signalisierungsinformationen übertragen werden können. Zu den Signalisierungsinformationen zählen unter anderem Steuerinformationen vom Endgerät für das Nachrichtenvermittlungssystem oder für ein weiteres Endgerät. Darüber hinaus umfassen diese auch Informationen zur Vermittlung von Kanälen (B-Kanäle) für die Übertragung von leitungsvermittelten Daten.

Zur Auswertung der Signalisierungsdaten werden bei ISDN üblicherweise D-Kanal-Vermittlungseinheiten eingesetzt, die neben einer zum Ansteuern der Übertragungsstrecke notwendigen seriellen Anschlußlogik pro D-Kanal je eine Timing-, Switching- und Collision-Kontrollschaltung sowie eine Sende/Empfangseinheit aufweisen. Eine derartige Vermittlungseinheit ist beispielsweise als Baustein PEB 2075 im Siemens Data Book, ICs für Communication, Ausgabe 2/89, Seiten 332 bis 354 beschrieben. Diese bekannte Vermittlungseinheit ist für vier D-Kanäle ausgelegt und in integrierter Schaltungstechnik realisiert. Der Anzahl der D-Kanäle bei diesem Baustein sind vor allem durch den erforderlichen hohen Schaltungsaufwand Grenzen gesetzt. In Folge dessen erhöht sich auch für die Vermittlungssysteme der schaltungstechnische Aufwand.

Ein digitales Nachrichtenvermittlungssystem mit geringerem Aufwand ist beispielsweise der deutschen Patentschrift DE-PS 41 41 493 zu entnehmen. Es enthält eine digitale Nachrichtenvermittlungseinheit, an der mehrere untergeordnete Einheiten über jeweils eine Übertragungsstrecke angeschlossen sind. Die Nachrichtenvermittlungseinheit ihrerseits umfaßt eine Empfangseinheit, die ihr zugeführte Signale auswertet und für eine weitere Verarbeitung aufbereitet. Der Empfangseinheit ist eine mit den Übertragungsstrecken gekoppelte Schalteinheit, die abhängig von einem Steuersignal eine der Übertragungsstrecken zu der Empfangseinheit durchschaltet, vorgeschaltet. Ebenfalls mit den Übertragungsstrecken gekoppelt ist eine Überwachungseinheit, die das Auftreten von Sendesignalen der untergeordneten Einheiten auf den jeweiligen Übertragungsstrecken detektiert und entsprechende Informationssignale abgibt. Mit der Überwachungseinheit, der Schalteinheit und den Übertragungsstrecken ist eine Auswahleinheit gekoppelt, die abhängig von den Informationssignalen der Überwachungseinheit nach bestimmten Kriterien eine der Übertragungsstrecken auswählt und entsprechende Steuersignale für die Schalteinheit und die untergeordneten Einheiten erzeugt. Bei einem Sendewunsch einer untergeordneten Einheit beginnt diese mit dem Senden der ersten Nachricht. Bevor die erste Nachricht vollständig gesendet worden ist, muß bei diesem Nachrichtenvermittlungssystem die übergeordnete Vermittlungseinheit im Falle, daß eine Übertragung zu dem Zeitpunkt (noch) nicht möglich ist, ein entsprechendes Signal an die untergeordnete Einheit senden, damit die erste Nachricht nicht verlorengeht. Bei rechtzeitigem Eintreffen des Signals nämlich, wird die erste Nachricht angehalten und so lange erneut gesendet oder verzögert bis eine Übertragung möglich ist. Trifft das Signal bei der untergeordneten Einheit nicht oder zu spät ein, so ist eine Wiederholung der bereits vollständig abgesandten Nachrichten nicht mehr möglich und diese gehen daher verloren. Demzufolge können bei einem digitalen Nachrichtenvermittlungssystem der eingangs genannten Art nur Übertragungsstrecken und Nachrichtenvermittlungseinheiten verwendet werden, deren Reaktionszeit insgesamt kürzer ist als die kürzesten zu sendenden Nachrichten der untergeordneten Endstelle.

Ferner ist eine Paketvermittlungsanlage mit Scheinpaketübermittlung aus der Druckschrift EP-A-0 333 225 bekannt.

Aufgabe der Erfindung ist es, ein digitales Nachrichtenvermittlungssystem anzugeben, bei dem die Reaktionszeiten der Übertragungsstrecke und der Nachrichtenvermittlungseinheiten zusammen größer sein darf als die kürzeste Nachricht der untergeordneten Einheit.

Die Aufgabe wird bei einem digitalen Nachrichtenvermittlungssystem der eingangs genannten Art durch die kennzeichnenden Merkmale des Patentanspruchs 1 gelöst. Ausgestaltungen und Weiterbildungen des Erfindungsgedankens sind Gegenstand von Unteransprüchen.

Die Erfindung wird nachfolgend anhand der in den Figuren der Zeichnung dargestellten Ausführungsbeispiele näher erläutert. Es zeigt:
- Figur 1: eine Ausführungsform eines erfindungsgemäßen digitalen Nachrichtenvermittlungssystems in einem Blockschaltbild und
- Figur 2: den Ablauf einer Sendeaufnahme bei dem Nachrichtenvermittlungssystem nach Figur 1 in einem Diagramm.

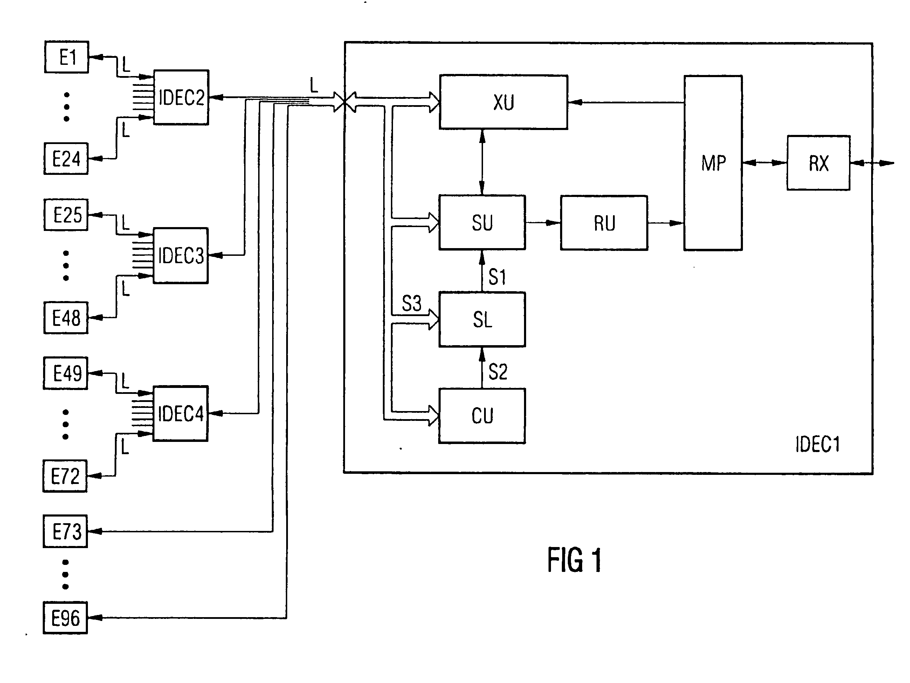

Bei dem erfindungsgemäßen digitalen Nachrichtenvermittlungssystem nach Figur 1 sind vier digitale Nachrichtenvermittlungseinheiten IDEC1 bis IDEC4 vorgesehen. Die Nachrichtenvermittlungseinheiten IDEC1 bis IDEC4 sind identisch aufgebaut. Im folgenden wird daher lediglich die Nachrichtenvermittlungseinheit IDEC1 stellvertretend näher beschrieben. Diese ist über jeweils eine Übertragungsstrecke mit mehreren, in diesem Fall 24 untergeordneten Einheiten gekoppelt. Als untergeordnete Einheiten fungieren zum einen Endstellen E73 bis E96 und zum anderen weitere Nachrichtenvermittlungseinheiten IDEC2 bis IDEC4. An diese sind wiederum jeweils 24 Endstellen E1 bis E24 bzw. E25 bis E48 bzw. E49 bis E72 über jeweils eine Übertragungsstrecke angeschlossen. Die Übertragungsstrecken werden in der Zeichnung allgemein mit L bezeichnet und umfassen neben den Übertragungsleitungen unter anderem auch die erforderlichen Einrichtungen zur Leitungsanpassung, primäre Kodier- bzw. Dekodiereinrichtungen sowie Sende- und Empfangsverstärker. Alternativ kann es sich aber auch um Funkstrecken etc. mit den dafür erforderlichen Einrichtungen handeln.

Die Nachrichtenvermittlungseinheit IDEC1 enthält eine Empfangseinheit RU, die ihr zugeführte Signale auswertet und für eine weitere Verarbeitung, beispielsweise durch eine Mikroprozessoreinheit MP und eine mit dieser verbundenen Sende-/Empfangseinrichtung RX, aufbereitet. Der Empfangseinheit RU ist eine mit den Übertragungsstrecken L gekoppelte Schalteinheit SU, die abhängig von einem Steuersignal S1 eine der Übertragungsstrecken L mit der Empfangseinheit RU koppelt, vorgeschaltet. Außerdem ist eine mit den Übertragungsstrecken L gekoppelte Überwachungseinheit CU vorgesehen, die das Auftreten von Sendesignalen der untergeordneten Einheiten IDEC2 bis IDEC4, E73 bis E96 auf den jeweiligen Übertragungsstrecken L detektiert und entsprechende Informationssignale S2 abgibt. Diese werden einer mit der Überwachungseinheit CU, den Übertragungsstrecken L sowie der Schalteinheit SU gekoppelten Auswahleinrichtung SL zugeführt, die davon abhängig nach bestimmten Kriterien eine der Übertragungsstrecken L auswählt und die entsprechenden Steuersignale S1 für die Schalteinheit SU und Steuersignale S3 für die untergeordneten Einheiten IDEC2 bis IDEC4, E73 bis E96 erzeugt. Darüber hinaus enthält die Nachrichtenvermittlungseinheit IDEC1 auch eine Sendeeinrichtung XU, die zwischen die Übertragungsstrecken L und die Mikroprozessoreinheit MP geschaltet ist, die aber für die weiteren Betrachtungen nicht maßgeblich ist und daher nicht näher beschrieben wird.

Nachdem eine der untergeordneten Einheiten IDEC2 bis IDEC4, E73 bis E76 von der Auswahleinheit SL ausgewählt wurde, werden durch entsprechende Steuersignale zum einen die nicht ausgewählten untergeordneten Einheiten für die Dauer des Sendebetriebs der ausgewählten untergeordneten Einheiten gesperrt und zum anderen nach Abschluß des Sendebetriebs die ausgewählte untergeordnete Einheit für eine bestimmte Dauer gesperrt. Als Kriterium für die Auswahl einer untergeordneten Einheit dient beispielsweise die Reihenfolge der Aufnahme des Sendebetriebs bei den untergeordneten Einheiten IDEC2 bis IDEC4, E73 bis E96. Dabei beginnt jede der untergeordneten Einheiten IDEC2 bis IDEC4, E73 bis E96, sobald dies erforderlich ist, sofort mit dem Sendebetrieb. Ist bereits eine andere untergeordnete Einheit ausgewählt worden, da diese bereits vorher den Sendebetrieb aufgenommen hat, so wird der untergeordneten Einheit die den Sendebetrieb später aufgenommen hat, ein entsprechendes Signal übertragen, worauf diese ihren Sendebetrieb einstellt und zu einem späteren Zeitpunkt erneut aufnimmt. Für den Fall, daß zwei oder mehrere untergeordnete Einheiten zur gleichen Zeit den Sendebetrieb aufnehmen, so wird nach einem in der Auswahleinheit SL abgelegten Prioritätsschema verfahren.

Damit im Falle, daß die Reaktionszeit der Übertragungsleitung L und der Nachrichtenvermittlungseinheit IDEC1 länger ist als die von einer untergeordneten Einheit gesendete kürzeste Nachricht, diese nicht verloren geht, sendet die jeweilige untergeordnete Einheit zunächst eine Nachricht, deren Inhalt keinerlei Bedeutung hat, und deren Verlust keinen Verlust an zu übertragender Information zur Folge hat. Um die zulässige Reaktionszeit weiter zu erhöhen, kann zum einen die erste Nachricht verhältnismäßig lang ausgestaltet sein und zum anderen können im Bedarfsfalle mehrere Nachrichten ohne Bedeutung zu Anfang gesendet werden. Diese "Scheinnachricht" kann eine bestimmte Bitkombination sein, die eine Identifikation als solche durch die übergeordnete Nachrichtenvermittlungseinheit IDEC1 ermöglicht. Diese ist zu diesem Zweck entsprechend ausgebildet. Darüber hinaus können zwei Verzögerungszeiten vorgesehen werden, von denen die eine die Laufzeit der Übertragungseinrichtung kompensieren soll und die andere als Wartezeit dient bis der Zustand der übergeordneten Nachrichtenvermittlungseinheit mit Sicherheit feststeht.

Erfindungsgemäß bedient eine digitale Nachrichtenvermittlungseinheit mit einer einzigen Empfangseinheit die Signalisierungskanäle -beispielsweise D-Kanäle- mehrerer Endgeräte - beispielsweise 24-. Es werden hierbei beispielsweise Übertragungsprotokolle auf HDLC-Basis (HDLC = High Level Data Link Control) im voll Duplexbetrieb wie etwa LAP-D verwendet. In Senderichtung ist die erforderliche Sequentialisierung der Datenübertragung automatisch gegeben. In Empfangsrichtung wird die durch die Auswahleinheit SL und einen zusätzlichen Kontrollkanal garantiert. Die Auswahleinheit SL nutzt den Kontrollkanal, um den Endgeräten den Signalisierungskanal zuzuteilen bzw. zu entziehen. Dabei steht pro Endgerät ein Kontrollkanal zur Verfügung. Er wird unidirektional in einer Master-Multi-Slave-Konfiguration betrieben. Über ihn wird den Endgeräten (Slaves) von der Auswahleinheit (Master) mitgeteilt, ob sie auf ihrem Signalisierungskanal senden dürfen. Der Kontrollkanal wird ebenso wie der Signalisierungskanal transparent über alle Schnittstellen hinweg durchgereicht. Gegebenenfalls kann durch Last-Look-Verfahren die Bitfehlerwahrscheinlichkeit auf dem Kontrollkanal reduziert werden. Eine Kontrolleinheit, wie beispielsweise der Mikroprozessor MP, kommuniziert mit den Endgeräten IDEC2 bis IDE4, E73 bis E96 über die zugehörigen Signalisierungskanäle. In Senderichtung können Sendeport-Timeslot und Timeslotlänge frei programmiert werden. Damit kann der Mikroprozessor MP sequenziell beliebige Endgeräte ansprechen. In Empfangsrichtung wird ein externes Signal wie etwa das sogenannte Strobe-Signal, das den Empfangsport/Timeslot selektiert, ausgewertet. Dieses Strobe-Signal wird von der Auswahleinheit generiert.

Die Auswahleinheit SL teil der Empfangseinheit RU jeweils eine untergeordnete Einheit IDEC2 bis IDEC4, E73 bis E96 zu. Über den Kontrollkanal zeigt diese den untergeordneten Einheiten IDEC2 bis IDEC4, E73 bis E96 an, ob die jeweiligen Signalisierungskanäle verfügbar oder blockiert sind. Nach der Systeminitialisierung sind alle Signalisierungskanäle gesperrt. Nachdem eine untergeordnete Einheit beispielsweise eine Aktivierungsprozedur erfolgreich durchgeführt hat, wird sie von der Auswahleinheit in eine Anforderungsliste aufgenommen. Zunächst wird allen untergeordneten Einheiten, die in dieser Liste geführt werden, die Verfügbarkeit ihrer Signalisierungskanäle angezeigt. Sobald die erste untergeordnete Einheit zu senden beginnt, wird die Empfangseinheit RU mittels des Strobe-Signals auf die sendende untergeordnete Einheit synchronisiert und die Signalisierungskanäle aller anderen untergeordneten Einheiten werden blockiert. Beginnen mehrere untergeordnete Einheiten gleichzeitig zu senden, so entscheidet die Auswahleinheit SL anhand eines Prioritätsschemas, wem der Signalisierungskanal zugeteilt bzw. entzogen wird. Dabei wird gleichzeitig sichergestellt, daß für den Fall mehrerer gleichzeitig sendender untergeordneter Einheiten, jede untergeordnete Einheit einmal an die Reihe kommt, bevor eine untergeordnete Einheit ein zweites Mal aktiviert wird. Die einzelnen Kanäle werden im Zeitmultiplexbetrieb übertragen.

Zunächst zeigt eine untergeordnete Einheit mittels eines Buszugriffsbits BAC, das innerhalb des zuletzt gesendeten IOM-Rahmens (IOM = ISDN Oriented Modular) übermittelt wurde, in Verbindung mit einer auf dem integrierten Arbeitskanal EOC (EOC = Embedded Operation Channel) gesendeten Nachricht seinen Zustand an. Daraus resultiert ein bestimmtes Verhalten eines Start-Stop-Bits SG (SG = Stop/Go) mit der Folge, daß bei einem ersten logischen Zustand 0 des Buszugriffsbits BAC das Start-Stop-Bit SG bevorzugt nach Ablauf einer Verzögerungszeit nach dem Übergang des Buszugriffsbits BAC auf den ersten logischen Zustand 0 transparent geschaltet wird, während der zur übergeordneten Nachrichtenvermittlungseinheit führende D-Kanal ohne Verzögerung auf dem ersten logischen Zustand 0 gehalten wird. Führt das Buszugriffsbit BAC einen zweiten logischen Zustand 1, dann ist das Start-Stop-Bit SG auf einen den Stop-Zustand repräsentierenden logischen Zustand gesetzt und der zur übergeordneten Nachrichtenvermittlungseinheit führende D-Kanal ist transparent geschaltet, wobei der der bisherige logische Zustand im D-Kanal zunächst noch übertragen wird.

Wird beispielsweise durch die übergeordnete Nachrichtenvermittlungseinheit ein auf den logischen Zustand 1 gesetztes Buszugriffsbit BAC auf dem Dateneingangskanal von einer untergeordneten Einheit empfangen, so wird durch die Nachrichtenvermittlungseinheit auf dem Datenausgangskanal das Start-Stop-Bit SG beim nächsten IOM-Rahmen auf die Stop-Position -beispielsweise den zweiten logischen Zustand 1-gesetzt. Der D-Kanal ist dabei transparent. Durch Setzen des Buszugriffsbits BAC auf den ersten logischen Zustand 0 signalisiert die Endstelle, daß sie den D-Kanal zur übergeordneten Nachrichtenvermittlungseinheit benutzen und den HDLC-Kontroller der übergeordneten Einheit auf einem Line-Modul anfordern möchte. Dies veranlaßt den D-Kanal in Richtung der übergeordneten Nachrichtenvermittlungseinheit beginnend mit dem nächsten IOM-Rahmen Bits mit dem ersten logischen Zustand 0 zu senden. Zudem wird das Start-Stop-Bit SG gleich dem zweiten logischen Zustand 1 gesetzt. Das bedeutet, daß das Start-Stop-Bit den Sendebeginn blockiert. Nach einer Verzögerungszeit von 1,5 ms und zusätzlichen zwei EOC-Rahmen wird das Start-Stop-Bit SG transparent und gibt damit den zuletzt erhaltenen Status wieder. Die ankommenden Bits mit jeweils dem ersten logischen Zustand 0 stehen am Line-Modul für die übergeordnete Nachrichtenvermittlungseinheit bereit, die der untergeordneten Einheit zugeordnet ist. Diese übergeordnete Nachrichtenvermittlungseinheit zeigt dann die Zuordnung zu dieser untergeordneten Einheit durch eine entsprechende EOC-Nachricht an, welche das Start-Stop-Bit SG auf den ersten logischen Zustand 0 setzt. Der D-Kanal sendet weiterhin zur übergeordneten Nachrichtenvermittlungseinheit den ersten logischen Zustand 0 bis Daten von der übergeordneten Nachrichtenvermittlungseinheit am Dateneingang eintreffen. Ein HDLC-Rahmen, der durch ein erstes Bit mit dem ersten logischen Zustand 0 auf dem D-Kanal beginnt, setzt den D-Kanal zurück in den transparenten Betriebsmodus. Dies erlaubt beliebige Verzögerungen zwischen dem Übergang des Start-Stop-Bits SG auf den ersten logischen Zustand 0 und dem Zeitpunkt, an dem der D-Kanal genutzt wird, ohne das Risiko den HDLC-Kontroller zu verlieren durch Senden einer beispielsweise ausschließlich aus Bits mit dem zweiten logischen Zustand 1 bestehenden Abbruchsanforderung. Am Ende eines HDLC-Rahmens wird das Buszugriffsbit BAC wiederum auf den zweiten logischen Zustand 1 zurückgesetzt. In Folge dessen wird auch das Start-Stop-Bit SG auf den zweiten logischen Zustand 1 gesetzt und dadurch der D-Kanal für weitere Übertragungen so lange blockiert, bis der HDLC-Kontroller erneut angefordert wird.

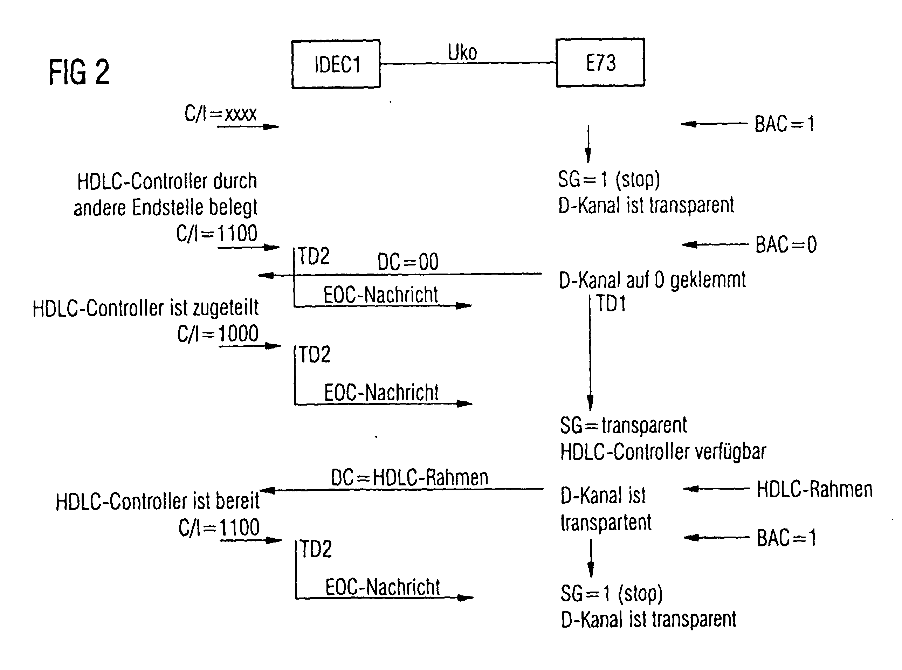

In Figur 2 ist schematisch der Fall dargestellt, daß eine untergeordnete Einheit, beispielsweise die untergeordnete Einheit E73, eine Anforderung an die übergeordnete Nachrichtenvermittlungseinheit, beispielsweise die Nachrichtenvermittlungseinheit IDEC1, über eine Verbindung Uko abgibt. Zunächst ist das Buszugriffsbit BAC am Dateneingang des D-Kanals auf den zweiten logischen Zustand 1 gesetzt. Das hat zur Folge, daß sich das Start-Stop-Bit SG in der Stop-Position befindet, nämlich in dem zweiten logischen Zustand 1. Die übergeordnete Nachrichtenvermittlungseinheit IDEC1 kann dabei ein Codewort C/I beliebigen Inhalts (xxxx) senden. Zur Anforderung eines Zugriffs auf die übergeordnete Nachrichtenvermittlungseinheit IDEC1 setzt die untergeordnete Einheit E73 das Buszugriffsbit BAC am Eingang des D-Kanals DC auf den ersten logischen Zustand 0. Das hat zur Folge, daß der D-Kanal DC in Richtung der übergeordneten Nachrichtenvermittlungseinheit IDEC1 auf den ersten logischen Zustand 0 geklemmt wird und das Start-Stop-Bit SG auf den zweiten logischen Zustand 1 gesetzt wird. Das Klemmen auf den ersten logischen Zustand 0 ergibt eine nur aus Nullen bestehende "Scheinnachricht" ohne inhaltliche Bedeutung. Die übergeordnete Nachrichtenvermittlungseinheit IDEC1 reagiert auf das Senden des ersten logischen Zustandes 0 mit der Zuordnung seines HDLC-Kontrollers an diese Endstelle E73. Dies wird durch den Wechsel des Codewortes C/I in Richtung der untergeordneten Einheit E73 angezeigt von beispielsweise "1100" auf "1000". In Folge dessen wird das Start-Stop-Bit SG nach einer ersten Verzögerungszeit auf den ersten logischen Zustand 0 gesetzt. Der D-Kanal wird in Richtung der untergeordneten Einheit E73 allein durch den Übergang von der Klemmung auf den ersten logischen Zustand 0 zum Zustand "transparent" am Anfang eines am Dateneingang ankommenden HDLC-Rahmens zurückgesetzt. Dieser HDLC-Rahmen wird in Richtung der übergeordneten Einheit IDEC1 übertragen. Am Ende des Rahmens wird das Buszugriffsbit BAC auf den zweiten logischen Zustand 1 gesetzt. Dies kann beispielsweise durch einen Layer-2-Kontroller (z.B. SMARTLINK, ICC, MBMC) erfolgen. Als Folge dessen wird das Start-Stop-Bit auf den zweiten logischen Zustand 1 im nächsten IOM-Rahmen gesetzt, das einen möglicherweise abgesandten zweiten HDLC-Rahmen, der nicht in der übergeordneten Einheit IDEC1 bearbeitet werden konnte, stoppt. Wenn die übergeordnete Einheit IDEC1 die Bearbeitung des HDLC-Rahmens beendet hat, ändert sie den Code C/I auf "1100". Der Code wird nach einer zweiten Verzögerungszeit TD2 an die untergeordnete Einheit E73 übertragen und bewirkt, daß das Start-Stop-Bit SG in der Stop-Position verharrt, unabhängig vom Buszugriffsbit BAC.

Die Verzögerungszeiten TD1 und TD2 ergeben sich wie folgt: Die Verzögerungszeit TD2 ergibt sich aus einem Zeitintervall von beispielsweise 6 ms, in dem eine EOC-Nachricht beispielsweise durch ein Uko-Interface übertragen werden kann. Nachdem eine EOC-Nachricht demzufolge nur alle 6 ms gesendet werden kann und die Übertragung 6 ms dauert, sollte für den "Worst Case" die Verzögerungszeit TD2 12 ms betragen. Die Verzögerungszeit TD2 spiegelt also die Laufzeit auf der Übertragungsstrecke L wieder.

Die Verzögerungszeit TD1 ist maximal beispielsweise 13,5 ms und minimal beispielsweise 7,5 ms je nach Anordnung des Superrahmens zu dem Zeitpunkt, an dem der HDLC-Kontroller durch die untergeordnete Einheit E73 angefordert wird. Diese Verzögerungszeit ist deshalb notwendig, da anstelle des Empfangs einer EOC-Nachricht "Start", wie angefordert, die untergeordnete Einheit E73 genauso die EOC-Nachricht "Stop" empfangen kann, wenn der HDLC-Kontroller bereits einem anderen Teilnehmer zugeteilt worden ist. Der HDLC-Kontroller, der vor dem Setzen des Buszugriffsbits durch eine andere untergeordnete Einheit besetzt ist, trifft als falsche EOC-Nachricht bei der untergeordneten Einheit E73 ein. Nur die zweite mögliche EOC-Nachricht gibt zuverlässig den angeforderten Status wieder.

Abschließend sei daraufhingewiesen, daß mehrere Einheiten, wie beispielsweise die Empfangseinheit RU, die Schalteinheit SU, die Auswahleinheit sowie der Mikroprozessor MP durch eine einzige Einheit, beispielsweise einen Signalprozessor, realisiert werden können. Auch ist es darüber hinaus möglich, den Signalisierungskanal und den Kontrollkanal zu einem einzigen Kanal zusammenzufassen. Je nach Anwendungsfall können auch die Verzögerungszeiten sowie Art und Aufbau der Nachrichten ohne Bedeutung variiert werden.

## Patentansprüche

1. Digitales Nachrichtenvermittlungssystem mit mindestens einer digitalen Nachrichtenvermittlungseinheit (IDEC1 bis IDEC4) und mit mehreren über jeweils eine Übertragungsstrecke (L) mit der jeweiligen Nachrichtenvermittlungseinheit (IDEC1 bis IDEC4) gekoppelten untergeordneten Einheiten (IDEC2 bis IDEC4, E73 bis E96),
**dadurch gekennzeichnet,**
**dass** die jeweilige untergeordnete Einheit (IDEC2 bis IDEC4, E73 bis E96) zur Signalisierung eines Sendewunsches zuerst mindestens eine Nachricht unbedeutenden Inhalts an die übergeordnete Nachrichtenvermittlungseinheit (IDEC1 bis IDEC4) und erst dann Nachrichten bedeutsamen Inhalts sendet.

2. Digitales Nachrichtenvermittlungssystem nach Anspruch 1,
**dadurch gekennzeichnet, daß** die digitale Nachrichtenvermittlungseinheit (IDEC1 bis IDEC4) eine Empfangseinheit (RU), die ihr zugeführte Signale auswertet und für eine weitere Verarbeitung aufbereitet,
eine der Empfangseinheit (RU) vorgeschaltete und mit den Übertragungsstrecken (L) gekoppelte Schalteinheit (SU), die abhängig von einem Steuersignal eine der Übertragungsstrecken (L) zu der Empfangseinheit (RU) durchschaltet,
eine mit den Übertragungsstrecken (L) gekoppelte Überwachungseinheit (CU), die das Auftreten von Sendesignalen der untergeordneten Einheiten (IDEC2 bis IDEC4, E73 bis E96) auf den jeweiligen Übertragungsstrecken (L) detektiert und entsprechende Informationssignale (S2) abgibt, und
eine mit der Überwachungseinheit (CU), der Schalteinheit (SU) und den Übertragungsstrecken (L) gekoppelte Auswahleinheit (SL), die abhängig von den Informationssignalen (S2) der Überwachungseinheit (CU) nach bestimmten Kriterien eine der Übertragungsstrecken (L) auswählt und entsprechende Steuersignale (S1, S3) für die Schalteinheit (SU) und die untergeordneten Einheiten (IDEC2 bis IDEC4, E73 bis E96) erzeugt, aufweist.

3. Digitales Nachrichtenvermittlungssystem nach Anspruch 1 oder 2,
**gekennzeichnet durch** eine erste Verzögerungszeit (TD1), die mindestens gleich der doppelten Dauer eines Nachrichtenrahmens ist und die zur Verzögerung der Reaktion der untergeordneten Einheit auf eine Nachricht der Nachrichtenvermittlungseinheit, daß diese **durch** eine andere untergeordnete Einheit belegt ist, vorgesehen ist.

4. Digitales Nachrichtenvermittlungssystem nach einem der Ansprüche 1 bis 3,
**gekennzeichnet durch** eine zweite Verzögerungszeit (TD2), die mindestens gleich der.Reaktionszeit der Nachrichtenvermittlungseinheit (IDEC1 bis IDEC4) und die zur Verzögerung der von der Nachrichtenvermittlungseinheit (IDEC1 bis IDEC4) gesendeten Nachrichten vorgesehen ist.

5. Digitales Nachrichtenvermittlungssystem nach einem der Ansprüche 1 bis 4,
**dadurch gekennzeichnet, daß** mindestens eine untergeordnete Einheit (IDEC2 bis IDEC4) durch eine weitere digitale Nachrichtenvermittlungseinheit gebildet wird.

6. Digitales Nachrichtenvermittlungssystem nach einem der Ansprüche 1 bis 5,
**dadurch gekennzeichnet, daß** von der Auswahleinheit (SL) nicht ausgewählte untergeordnete Einheiten (IDEC2 bis IDEC4, E73 bis E96) aufgrund von der Auswahleinheit (SL) abgegebener Steuersignale (S3) den Sendebetrieb für eine bestimmte Dauer einstellen.

7. Digitales Nachrichtenvermittlungssystem nach einem der Ansprüche 1 bis 6,
**dadurch gekennzeichnet, daß** eine von der Auswahleinheit (SL) ausgewählte untergeordnete Einheit (IDEC2 bis IDEC4, E73 bis E96) durch ein entsprechendes Steuersignal (S3) für eine bestimmte Dauer nach Abschluß des Sendebetriebs.gesperrt wird.

8. Digitales Nachrichtenvermittlungssystem nach einem der Ansprüche 1 bis 7,
**dadurch gekennzeichnet, daß** ein Kriterium für die Auswahl einer untergeordneten Einheit die Reihenfolge der Aufnahme des Sendebetriebs bei den untergeordneten Einheiten (IDEC2 bis IDEC4, E73 bis E96) ist.

9. Digitales Nachrichtenvermittlungssysteme nach einem der Ansprüche 1 bis 8,
**dadurch gekennzeichnet, daß** mehrere Datenkanäle in Zeitmultiplexbetrieb zwischen den untergeordneten Einheiten (IDEC2 bis IDEC 4, E73 bis E96) und der digitalen Nachrichtenvermittlungseinheit (IDEC1) übertragen werden.

10. Digitales Nachrichtenvermittlungssystem nach einem der Ansprüche 1 bis 9,
**dadurch gekennzeichnet, daß** der Empfängereinheit (RU) eine Datenverarbeitungseinheit (MP) nachgeschaltet ist.

## Claims

1. Digital message switching system comprising at least one digital message switching unit (IDEC1 to IDEC4) and comprising a plurality of subordinate units (IDEC2 to IDEC4, E73 to E96) which can be coupled to the respective message switching unit (IDEC1 to IDEC4) via in each case one bidirectional transmission link (L), **characterized in that** for signalling a request to transmit, the respective subordinate unit (IDEC2 to IDEC4, E73 to E96) firstly transmits at least one message with no meaningful content to the superordinate message switching unit (IDEC1 to IDEC4) and only then transmits messages of meaningful content.

2. Digital message switching system according to Claim 1, **characterized in that** the digital message switching unit (IDEC1 to IDEC4) comprises a receiving unit (RU) for evaluating the signals supplied to the receiving unit (RU) and conditioning them for further processing, a switching unit (SU) which precedes the receiving unit (RU) and is coupled to the transmission links (L), for switching one of the transmission links (L) through to the receiving unit in dependence on a control signal, a control unit (CU) which is coupled to the transmission links (L) for detecting the occurrence of transmit signals of the subordinate units (IDEC2 to IDEC4, E73 to E96) on the respective transmission links (L) and for delivering corresponding information signals (S2) and a selection unit (SL) which is coupled to the control unit (CU), the switching unit (SU) and the transmission links (L) for selecting one of the transmission links (L) in accordance with certain criteria depending on the information signals (S2) of the control unit (CU) and for generating corresponding control signals (S1, S3) for the switching unit (SU) and the subordinate units (IDEC2 to IDEC4, E73 to E96).

3. Digital message switching system according to Claim 1 or 2, **characterized by** a first delay time (TD1) which is at least equal to twice the duration of a message frame and which is provided for delaying the response of the subordinate unit to a message of the message switching unit that this is occupied by another subordinate unit.

4. Digital message switching system according to one of Claims 1 to 3, **characterized by** a second first delay time (TD2) which is at least equal to the response time of the message switching unit (IDEC1 to IDEC4) and is provided to delay the message transmitted by the message switching unit (IDEC1 to IDEC4).

5. Digital message switching system according to one of Claims 1 to 4, **characterized in that** at least one subordinate unit (IDEC2 to IDEC4) is formed by a further digital message switching unit.

6. Digital message switching system according to one of Claims 1 to 5, **characterized in that** on the basis of control signals (S3) delivered by the selection unit (SL), subordinate units (IDEC2 to IDEC4, E73 to E96) not selected by the selection unit (SL) stop the transmitting operation for a certain period.

7. Digital message switching system according to one of Claims 1 to 6, **characterized in that** a subordinate unit (IDEC2 to IDEC4, E73 to E96), which is selected by the selection unit (SL), is blocked by a corresponding control signal (S3) for a certain period after conclusion of the transmitting operation.

8. Digital message switching system according to one of Claims 1 to 7, **characterized in that** the order in which the transmitting operation is started at the subordinate units (IDEC2 to IDEC4, E73 to E96) is a criterion for selecting a subordinate unit.

9. Digital message switching system according to one of Claims 1 to 8, **characterized in that** a number of data channels are transmitted in time-division multiplex mode between the subordinate units (IDEC2 to IDEC4, E73 to E96) and the digital message switching unit (IDEC1).

10. Digital message switching system according to one of Claims 1 to 9, **characterized in that** the receiving unit (RU) is followed by a data processing unit (MP).

## Revendications

1. Système numérique de commutation de messages comportant au moins une unité numérique de commutation de messages (IDEC1 à IDEC4) et plusieurs unités subordonnées (IDEC2 à IDEC4, E73 à E96) couplées à l'unité de commutation de messages respective (IDEC1 à IDEC4) par l'intermédiaire d'une voie de transmission (L) à chaque fois, **caractérisé en ce que**, pour la signalisation d'un souhait d'émission, l'unité subordonnée respective (IDEC2 à IDEC4, E73 à E96) envoie à l'unité de commutation de messages supérieure (IDEC1 à IDEC4) d'abord au moins un message de contenu insignifiant et seulement ensuite des messages de contenu significatif.

2. Système numérique de commutation de messages selon la revendication 1, **caractérisé en ce que** l'unité numérique de commutation de messages (IDEC1 à IDEC4) comporte une unité de réception (RU), qui évalue des signaux qui lui sont envoyés et les prépare pour un traitement ultérieur, un commutateur (SU), qui est raccordé en amont de l'unité de réception (RU), qui est couplé aux voies de transmission (L) et qui connecte l'une des voies de transmission (L) à l'unité de réception (RU) en fonction d'un signal de commande, une unité de surveillance (CU), qui est couplée aux voies de transmission (L) et qui détecte l'apparition de signaux d'émission des unités subordonnées (IDEC2 à IDEC4, E73 à E96) sur les voies de transmission respectives (L) et délivre des signaux d'information correspondants (S2), et une unité de sélection (SL), qui est couplée à l'unité de surveillance (CU), au commutateur (SU) et aux voies de transmission (L) et qui sélectionne l'une des voies de transmission (L) selon certains critères en fonction des signaux d'information (S2) de l'unité de surveillance (CU) et produit des signaux de commande correspondants (S1, S3) pour le commutateur (SU) et pour les unités subordonnées (IDEC2 à IDEC4, E73 à E96).

3. Système numérique de commutation de messages selon la revendication 1 ou 2, **caractérisé par** un premier temps de retard (TD1) qui est au moins égal au double de la durée d'une trame de message et qui est prévu pour retarder la réaction de l'unité subordonnée à un message de l'unité de commutation de messages indiquant que celle-ci est occupée par une autre unité subordonnée.

4. Système numérique de commutation de messages selon l'une des revendications 1 à 3, **caractérisé par** un second temps de retard (TD2) qui est au moins égal au temps de réaction de l'unité de commutation de messages (IDEC1 à IDEC4) et qui est prévu pour retarder les messages émis par l'unité de commutation de messages (IDEC1 à IDEC4).

5. Système numérique de commutation de messages selon l'une des revendications 1 à 4, **caractérisé en ce qu'**au moins une unité subordonnée (IDEC2 à IDEC4) est formée par une autre unité numérique de commutation de messages.

6. Système numérique de commutation de messages selon l'une des revendications 1 à 5, **caractérisé en ce que**, sur la base de signaux de commande (S3) délivrés par l'unité de sélection (SL), des unités subordonnées (IDEC2 à IDEC4, E73 à E96) non sélectionnées par l'unité de sélection (SL) interrompent leur mode de fonctionnement d'émission pour une certaine durée.

7. Système numérique de commutation de messages selon l'une des revendications 1 à 6, **caractérisé en ce qu'**une unité subordonnée (IDEC2 à IDEC4, E73 à E96) sélectionnée par l'unité de sélection (SL) est bloquée par un signal de commande correspondant (S3) pour une certaine durée après la fin du mode de fonctionnement d'émission.

8. Système numérique de commutation de messages selon l'une des revendications 1 à 7, **caractérisé en ce qu'**un critère pour la sélection d'une unité subordonnée est l'ordre de la mise en mode d'émission des unités subordonnées (IDEC2 à IDEC4, E73 à E96).

9. Système numérique de commutation de messages selon l'une des revendications 1 à 8, **caractérisé en ce que** plusieurs canaux de données sont transmis en mode de multiplexage temporel entre les unités subordonnées (IDEC2 à IDEC4, E73 à E96) et l'unité numérique de commutation de messages (IDEC1).

10. Système numérique de commutation de messages selon l'une des revendications 1 à 9, **caractérisé en ce qu'**une unité de traitement de données (MP) est raccordée en aval de l'unité de réception (RU).
